# EUROPÄISCHE PATENTSCHRIFT

(11) **EP 1 049 719 B1**
(45) Veröffentlichungstag und Bekanntmachung des Hinweises auf die Patenterteilung: **10.03.2004**
(21) Anmeldenummer: 98956911.6
(22) Anmeldetag: 13.11.1998
(51) Int. Cl.: C08B 11/193, C08F 2/24, C08B 11/187

(54) **BUTENYLGRUPPEN ENTHALTENDE CELLULOSEETHER UND DEREN VERWENDUNG ALS SCHUTZKOLLOIDE BEI POLYMERISATIONEN**
CELLULOSE ETHERS CONTAINING BUTENYL GROUPS, AND THEIR USE AS PROTECTIVE COLLOIDS FOR POLYMERISATION
ETHERS CELLULOSIQUES CONTENANT DES GROUPES BUTENYLE ET LEUR UTILISATION COMME COLLOIDES PROTECTEURS LORS DE POLYMERISATIONS

(30) Priorität: 21.11.1997 DE 19751712
(43) Veröffentlichungstag der Anmeldung: 08.11.2000
(73) Patentinhaber: Clariant GmbH, 65929 Frankfurt am Main (DE)
(72) Erfinder: DÖNGES, Reinhard, D-65812 Bad Soden (DE); EHRLER, Rudolf, D-65439 Flörsheim (DE); WURM, Horst, D-65201 Wiesbaden (DE)
(86) Internationale Anmeldenummer: PCT/EP1998/007268
(87) Internationale Veröffentlichungsnummer: WO 1999/026982

(56) Entgegenhaltungen:
- EP-A- 0 863 158
- US-A- 2 082 797
- US-A- 3 754 877
- US-A- 5 166 332
- US-A- 5 504 123

## Beschreibung

Die Herstellung von Vinylpolymeren durch radikalische Polymerisation in wäßrigem, lösemittelfreiem Medium macht eine Emulgierung der hydrophoben Monomeren und nach erfolgter Polymerisation die Stabilisierung des Polymers erforderlich. Bei der Polymerisation von Monomersystemen, die wasserunlösliche Vinylmonomere enthalten, in wäßrigen Systemen werden daher neben Tensiden auch Schutzkolloide benötigt, die einerseits hydrophilen Charakter besitzen, andererseits auch eine dispergierende Wirkung aufweisen sollen.

Die Qualität einer Kunststoffdispersion wird entscheidend durch die Wahl des Schutzkolloids beeinflußt. Wichtige Qualitätskriterien, die durch die Schutzkolloide beeinflußt werden können sind beispielsweise die Stabilität, Viskosität, Rheologie, die Teilchengröße der Polymerpartikel der Dispersion sowie die Koagulatmenge, die bei der Filtration der Dispersion durch ein Sieb zurückbleibt. Auch das Molekulargewicht wird durch das Schutzkolloid beeinflußt. Ein weiteres Qualitätskriterium ist die Wasseraufnahme eines Filmes, der nach Ausbringen und Trocknung einer Dispersion hergestellt wurde. Auch diese Eigenschaft wird durch das Schutzkolloid beeinflußt. Bei der Suspensionspolymerisation steuert das Schutzkolloid die Teilchengröße des gebildeten Polymerisats.

Es ist seit langem bekannt, daß polymere Kohlenhydrate wie Stärke, Dextrane und wasserlösliche Cellulosederivate geeignete Schutzkolloide für wasserhaltige Polymerisationssysteme darstellen. Das in der kommerziellen Herstellung von Polyvinylacetat-Dispersion am häufigsten eingesetzte Schutzkolloid ist Hydroxyethylcellulose (Cellulose and its Derivates, Kap. 26, Ellis Horwood Limited 1985), die in technischem Maßstab aus Zellstoff und Ethylenoxid hergestellt wird.

Als entscheidender Vorgang beim Einsatz von Schutzkolloiden in der Emulsionspolymerisation wird die Radikalbildung am Schutzkolloid und anschließende Pfropfung des Monomers auf das Kolloid angesehen. Die Pfropfrate hängt von der Wahl des Radikalinitiators ab. Als Radikalstarter werden üblicherweise Diazoverbindungen, Redox-Initiatoren, organische oder anorganische Peroxoverbindungen eingesetzt. Andererseits ist die Pfropfrate auch von der Natur des Schutzkolloids abhängig. Ist die Pfropfrate gering, muß die Konzentration des Schutzkolloids entsprechend hoch gewählt werden, um eine ausreichende Wirkung zu erzielen. Eine hohe Schutzkolloid-Konzentration ist jedoch einerseits aus Kostengründen unerwünscht, andererseits führt sie auch zu einer erhöhten Hydrophilie des zu einem Film ausgezogenen Polymers, verbunden mit einer erhöhten Wasseraufnahme.

In der US-A 4,845,175 wird gezeigt, daß durch Einsatz von hydrophob mit Arylalkylgruppen modifizierter Hydroxyethylcellulose die Menge des Schutzkolloids reduziert werden kann. Jedoch erfordert die Herstellung hydrophob modifizierter Hydroxyethylcellulose teure Reagenzien, die teilweise über mehrere Stufen synthetisiert werden müssen.

In der US-A 5,049,634 wird aufgezeigt, daß Kohlenhydrate für radikalische Pfropfungen besser zugänglich werden, wenn 2-Propenylgruppen am Polymer gebunden sind. Durch Vorbehandlung von Stärke mit Allylglycidylether werden allylgruppenhaltige Stärkederivate und deren Pfropfung mit Acetal- oder Aldehydhaltigen Monomeren beschrieben. Die CS-A 263 561 beschreibt die Aufpfropfung von Acrylamid auf nach einem speziell in Dioxan-Suspension hergestellten Allylgruppen-haltigen Kohlenhydratpolymeren.

Die Herstellung und die Polymerisierbarkeit Allylgruppen-haltiger Cellulosederivate in Lösung wurde bereits in der Literatur beschrieben. Aus der DE-A 14 18 271 ist zu entnehmen, daß Lösungen von allylgruppenhaltigen Polymeren durch Zusatz von Radikalstartem Gele bilden. In der EP-A 0 541 939 werden allylglycidyletherhaltige polymere Cellulosederivate beansprucht, die bei einem Substitutionsgrad von 0,05 bis 0,5 Allylglycidylgruppen pro monomere Kohlenhydrateinheit ebenfalls polymerisierbar sind. Der Zusatz derart modifizierter Kohlenhydrate erhöht die Scheuerfestigkeit von Dispersionsfarben. Die US-A 5,504,123 beschreibt Celluloseether mit einem ungesättigten (C₄-C₂₀)-Alkylrest als Additive für Dispersionsfarben. Als Vorteil werden verbesserte Filmbildeeigenschaften genannt.

Polymerisierbare Alkenylgruppen-haltige Methylhydroxypropylcelluloseether und deren Verwendung bei der Herstellung von Folien und Beschichtungen werden in der EP-B 0 457 092 beschrieben. Der molare Substitutionsgrad wird mit 0,05 bis 1,0 angegeben.

In der SU-A 1 484 814 ist beschrieben, daß allylgruppenhaltige Cellulosederivate, die einen Substitutionsgrad an Allylethergruppen von 0,04 bis 0,3 und einen Polymerisationsgrad von 1000 bis 1200 aufweisen, mit Vinylacetat gepfropft werden können. Für den praktischen Einsatz in Polymerisationssystemen sind Schutzkolloide mit sehr hohen Polymerisationsgraden weniger günstig, da sie hohe Viskositäten, verbunden mit Rühr- und Förderproblemen verursachen.

Die Aufgabe der Erfindung war es, Schutzkolloide für Polymerisationen in wäßrigen Systemen zu entwickeln, die bei reduzierter Einsatzmenge und guter Verarbeitbarkeit die gleiche oder bessere Qualität der hergestellten Kunststoffdispersionen oder -suspensionen gewährleisten.

Es wurde gefunden, daß die hydrophilen butenylgruppenhaltige nichtionische Cellulosederivate hervorragend als Schutzkolloide in der Emulsionspolymerisation geeignet sind, wenn der Substitutionsgrad bezüglich Butenylgruppen 0,1 Butenylgruppen pro Monomereinheit nicht übersteigt. Bei Verwendung derartiger Schutzkolloide ist eine wesentlich geringere Einsatzmenge gegenüber herkömmlichen keine Butenylgruppen enthaltenden Schutzkolloiden erforderlich.

Gegenstand der Erfindung ist die Verwendung von wasserlöslichen, nichtionischen Celluloseethern aus der Gruppe der Alkylcellulosen und Hydroxyalkylcellulosen, die zusätzlich mit Butenylgruppen substituiert sind und bei denen die durchschnittliche Anzahl der Butenylgruppen pro Anhydroglucoseeinheit (DS_{Butenyl}) 0,003 bis 0,10 beträgt, als Schutzkolloide bei der Herstellung von wässrigen Polymerdispersionen.

Aus Y.Avny, R.Rahman und A.Zilkha, J. Macromol. Sci. A6(7),1427-1434 (1972) sind Umsetzungsprodukte von Alkalicellulose mit Crotylbromid bekannt. Hierbei handelt es sich jedoch um hochsubstituierte und somit hydrophobe, wasserunlösliche Derivate.

Bevorzugter Gegenstand der Erfindung ist die Verwendung der Celluloseether der allgemeinen Formel

[C₆H₇O₂(OR¹)(OR²)(OR³)]ₙ

wobei
- C₆H₇O₂: eine Anhydroglucoseeinheit,
- n: 50 - 1700, insbesondere 100 - 300,
- und R¹, R² und R³: unabhängig voneinander eine Polyalkylenoxidkette der allgemeinen Formel 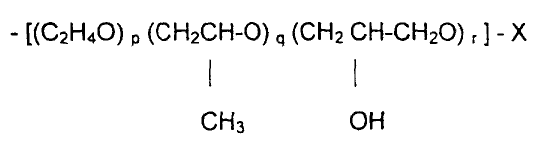 mit X = H, CH₃, C₂H₅ oder CHR⁴CR⁵ = CHR⁶
darstellt, worin
p, q und r unabhängig voneinander in R¹, R² und R³ jeweils unabhängig Werte von 0 bis 4 annehmen können, die Summe aller (p+q+r) addiert über R¹, R² und R³ pro Anhydroglucoseeinheit durchschnittlich größer als 1,3 und kleiner als 4,5, vorzugsweise 1,5 bis 3,0, ist und wobei die Reihenfolge der Oxyalkyleinheiten in der Polyalkylenoxidkette beliebig ist und die durchschnittliche Anzahl der CHR⁴CR⁵ = CHR⁶-Gruppen pro Anhydroglucoseeinheit (DS Butenyl) 0,003 bis 0,5, vorzugsweise 0,02 bis 0,06, beträgt.

R⁴, R⁵ und R⁶ sind ein H-Atom oder eine CH₃-Gruppe, wobei nur einer der Reste eine CH₃-Gruppe ist und die anderen beiden jeweils ein H-Atom sind.

Bevorzugte Celluloseether sind beispielsweise die Butenylether von
Hydroxyethylcellulose (1,3 < p < 4,5; q = 0; r = 0),
Hydroxypropylcellulose (p = 0; 1,3 < q < 4,5; r = 0),
Dihydroxypropylcellulose (p = 0; q = 0; 1,3 < r < 4,5),
sowie Mischether der Celluloseether mit den genannten Hydroxyalkylsubstituenten.

Die Celluloseether Können hergestellt werden durch Veretherung von Cellulose mit einem Veretherungsmittel aus der Gruppe der Alkylhalogenide und der Alkylenoxide und Veretherung mit einem Alkenylhalogenid oder Alkenylglycidylether unter Baseneinfluß oder durch Veretherung von Celluloseethern aus der Gruppe der Alkylcellulosen und Hydroxyalkylcellulosen mit einem Alkenylhalogenid oder einem Alkenylglycidylether unter Baseneinfluß, vorzugsweise
A) durch Veretherung von Cellulose mit Ethylenoxid und/oder Propylenoxid und/oder Glycidalkohol und mit Butenylhalogenid unter Baseneinwirkung oder mit Butenylglycidylether unter Basenkatalyse, vorzugsweise in einem Suspensionsmittel;
B) durch Veretherung von Hydroxyethylcellulose, Hydroxypropylcellulose, Dihydroxypropylcellulose oder einem Celluloseether mit mehreren der genannten Hydroxyalkylsubstituenten mit einem Butenylhalogenid unter Baseneinwirkung oder mit Butenylglycidylether unter Basenkatalyse, vorzugsweise in einem Suspensionsmittel.
Als Suspensionsmittel werden vorzugsweise niedere Alkohole oder Ketone, beispielsweise Isopropanol, tert.-Butanol oder Aceton im Gewichtsverhältnis zur Cellulose von 3:1 bis 30:1 , vorzugsweise 8:1 bis 15:1 eingesetzt. Als Base finden üblicherweise wäßrige Lösungen von Alkalimetallhydroxiden, insbesondere Natriumhydroxid, Verwendung. Das Molverhältnis Base/Anhydroglucoseeinheit wird durch das eingesetzte Kohlenhydrat(derivat) vorgegeben. Für den Einsatz von Cellulose (Verfahren I) beträgt das Molverhältnis vorzugsweise zwischen 1.0 und 1,5, für bereits veretherte Produkte (Verfahren II) vorzugsweise zwischen 0,1 und 1,0 Mol Base pro Anhydroglucoseeinheit.

Der Wassergehalt der Reaktionsmischung liegt vorzugsweise zwischen 5 und 30, insbesondere zwischen 8 und 20 Mol Wasser pro Anhydroglucoseeinheit.

Nach Vorlegen des Suspensionsmittels, Zugabe der Cellulose (bzw. des Celluloseethers) und Alkalisierung mit der wäßrigen Base wird der Ansatz gut homogenisiert und ohne Wärmezufuhr, gegebenenfalls unter Kühlung, vorzugsweise 0,5 bis 2 Stunden gerührt. Danach werden die Veretherungsreagentien (Epoxyalkane, Alkylhalogenide, Alkenylhalogenide, Alkenylglycidylether) gemeinsam oder nacheinander zugegeben. Der Ansatz wird dann auf die bevorzugte Temperatur von 60 bis 120°C, insbesondere 80 bis 100°C gebracht und vorzugsweise 2 bis 6 Stunden lang erhitzt. Nach Abkühlen wird mit einer Säure, vorzugsweise Salzsäure, Salpetersäure oder Essigsäure vorzugsweise auf pH 6 bis 8 neutralisiert. Das Suspensionsmittel wird durch Dekantieren oder Filtrieren entfernt, der rohe Cellulosemischether kann durch Extraktion mit wäßrigen Alkoholen oder Ketonen mit einem bevorzugten Wasseranteil von 10 bis 50 Gew.-%, insbesondere Isopropanol, Ethanol und Aceton, von den anhaftenden Nebenprodukten, beispielsweise Polyglykolen, Glykolethem und Salzen befreit werden. Durch Trocknen im Vakuum oder bei Normaldruck bei 50 bis 120°C erhält man den gewünschten Cellulosemischether als farbloses bis leicht gelbliches Pulver.

Bei Bedarf kann der erfindungsgemäß gewünschte Polymerisationsgrad des Celluloseethers vor oder im Laufe seines Herstellungsprozesses durch Zugabe einer Peroxoverbindung, wie zum Beispiel Wasserstoffperoxid oder eines Peroxodisulfatsalzes oder eines anderen Oxidationsmittels, beispielsweise Natriumchlorit, eingestellt werden. Die genannten Methoden zum Molekulargewichtsabbau und ihre jeweilige technische Durchführung sind Stand der Technik (T. M. Greenway in "Cellulosic Polymers, Blends and Composites", Herausg. R. D. Gilbert, Carl Hanser Verlag München, 1994, S.178ff.).

Gegenstand der Erfindung ist auch die Verwendung der genannten Celluloseether als Schutzkolloide bei der Herstellung von wäßrigen Polymerdispersionen durch radikalisch initiierte Polymerisation von ethylenisch ungesättigten Monomeren in wäßriger Emulsion.

Der Anteil der Celluloseether bei der Herstellung von derartigen Polymerdispersionen beträgt vorzugsweise 0,2 bis 5,0 Gew.-%, insbesondere 0,3 bis 1,0 Gew.-%, bezogen auf die Gesamtmenge der eingesetzten Monomeren.

Geeignete Monomere sind ethylenisch ungesättigte, radikalisch polymerisierbare Verbindungen, die an sich wasserunlöslich sind, beispielsweise
einfache ethylenisch ungesättigte Kohlenwasserstoffe mit Kettenlängen von 2 bis 12 Kohlenstoffatomen, vorzugsweise Ethylen und Propylen;
Ester mit Kettenlängen zwischen 2 und 12 Kohlenstoffatomen der Acryl-, Methacryl-, Malein-, Fumar- oder Itaconsäure, vorzugsweise Ethyl-, Propyl- und Butylester;
Vinylester von unverzweigten und verzweigten Carbonsäuren mit Kettenlängen von
1 bis 12 Kohlenstoffatomen, insbesondere Vinylacetat und Versaticsäurevinylester;
ethylenisch ungesättigte aromatische Verbindungen, vorzugsweise Styrol;
ethylenisch ungesättigte Aldehyde und Ketone mit 3 bis 12 Kohlenstoffatomen, vorzugsweise Acrolein, Methacrolein und Methylvinylketon,
halogenhaltige ethylenisch ungesättigte Verbindungen, beispielsweise Vinylchlorid.

Besonders bevorzugt sind Gemische aus den genannten Monomeren, bei denen mindestens eine Komponente ein Vinylester, vorzugsweise Vinylacetat ist. Es können auch Gemische aus einer oder mehrerer der genannten Monomeren mit hydrophilen Monomeren, beispielsweise Acrylnitril, Acrylsäure, Methacrylsäure, Itaconsäure oder deren Mischungen eingesetzt werden.

Vorzugsweise enthält eine wäßrige Polymerisationsrezeptur, in der die erfindungsgemäßen Celluloseether als Schutzkolloide eingesetzt werden, 10 bis 70 Gew.-%, vorzugsweise 30 bis 60 Gew.-%, der oben genannten Monomeren, sowie 0 bis 10 Gew.-% eines oder mehrerer Emulgatoren. Als Radikalstarter werden üblicherweise Diazoverbindungen, Redox-Initiatoren, organische oder anorganische Peroxoverbindungen in Mengen von 0,1 bis 3 Gew.-%, vorzugsweise 0,5 bis 1 Gew.-%, bezogen auf die Gesamtmenge der Monomere, eingesetzt. Weitere Hilfsstoffe, beispielsweise Puffersubstanzen oder Konservierungsstoffe, können zugesetzt werden.

Alle Komponenten können zu Beginn der Reaktion gemeinsam vorgelegt sein, wobei das Monomer, bzw. Monomergemisch durch Rührung oder andere Mischaggregate emulgiert wird. Durch Erhöhen der Temperatur wird der Polymerisationsvorgang in Gang gesetzt. Die erforderlichen Temperaturen sind abhängig vom verwendeten Initiatorsystem und betragen zwischen 40 und 120°C. Nach Anspringen der Reaktion kann durch die Exothermie der Reaktion auch eine Kühlung erforderlich werden. Das Ende der Reaktion ist an einem Abklingen der Exothermie zu erkennen. Zur Vervollständigung der Reaktion wird wahlweise eine Nachreaktion durch äußere Wärmezufuhr nachgeschaltet. Nach Abkühlen können Hilfstoffe zur Einstellung eines pH-Wertes, wie zum Beispiel Puffer, Säuren oder Basen oder zur Stabilisierung, beispielsweise Konservierungsstoffe, zugegeben werden. Wahlweise kann die Polymerisation auch mit einem Bruchteil, beispielsweise 10 bis 20 Gew.-% der Monomer- und Radikalstartermenge, gestartet werden und nach Anspringen der Reaktion weiter Monomer und Radikalstarter zudosiert werden, vorzugsweise derart, daß die gewünschte Polymerisationstemperatur durch die Zugabe gesteuert wird
Die erfindungsgemäß erhaltenenen Dispersionen werden mit folgenden Eigenschaften charakterisiert:
Viskosität der Dispersionen bei niedrigem Schergefälle (1,0 s⁻¹):
   Für eine gute Verarbeitbarkeit und Stabilität der Dispersion ist vorzugsweise eine Viskosität zwischen 10.000 und 30.000 mPa·s, insbesondere 15.000 bis 25.000 mPa·s, erwünscht.
Viskosität der Dispersionen bei hohem Schergefälle (>250 s⁻¹):
   Für eine gute Förderbarkeit der Dispersionen soll die Viskosität bei hohem Schergefälle vorzugsweise < 450 mPa·s (bei 250 s⁻¹), insbesondere 200 bis 420 mPa·s, sein.
Mittlere Teilchengröße der Dispersion:
   Die mittlere Teilchengröße der Dispersion sollte vorzugsweise 200 bis 300 nm (gemessen bei einer Wellenlänge von 435 nm) sein, um ein unerwünschtes Absetzen der Dispersion (Serumbildung) zu verhindern.
Koagulatmenge nach Filtrieren der Dispersion durch ein 100 µm- und 40 µm-Sieb, ausgedrückt in mg Koagulat pro 1000 g Dispersion:
   Die Dispersionen haben einen Koagulatanteil von vorzugsweise < 1000 mg/kg Dispersion bei 40 µm-Filtration.
Wasseraufnahme der getrockneten Polymerfilme:
   Die Dispersion wird auf eine Platte ausgegossen und zu einem Film getrocknet. Nach Behandlung mit Wasser wird durch die Gewichtszunahme die 1. Wasseraufnahme
   (in Gew.-% des Eigengewichts des Polymerfilms) ermittelt. Nach erneutem Trocknen wird die 2. Wasseraufnahme ermittelt. Die 1. Wasseraufnahme ist in der Regel größer als die 2. Wasseraufnahme, da beim ersten Bewässern des Filmes die hydrophilen Komponenten (Emulgatoren, Schutzkolloid) herausgewaschen werden. Sie sollte vorzugsweise unter 25%, insbesondere zwischen 5 und 20 Gew.-%, liegen.
   Zusätzlich zu den aufgeführten anwendungstechnischen Parametern spielt die Pfropfausbeute des eingesetzten Schutzkolloids eine wichtige Rolle. Eine hohe Pfropfausbeute signalisiert eine hohe Effizienz des Schutzkolloids. Zu hohe Pfropfausbeuten führen allerdings zu Vernetzungen der Polymerpartikel, verbunden mit hohen Koagulatanteilen und dilatantem Fließverhalten der Dispersion. Die Pfropfausbeute liegt vorzugsweise zwischen 15 und 30%, insbesondere zwischen 20 und 25%.

Der Einsatz der butenylgruppenhaltigen Hydroxyethylcellulose bei der Herstellung von Vinyldispersionen besitzt den Vorteil, daß nur die Hälfte einer konventionellen, handelsüblichen Hydroxyethylcellulose eingesetzt werden muß, und daß die Dispersionen, die mit den erfindungsgemäß eingesetzten Schutzkolloiden hergestellt werden, von besserer Qualität sind.

### Beispiele

Die Angaben der Susbstitutionsgrade beziehen sich bei Hydroxyethylgruppen auf den molaren Substitutionsgrad (MS), bei den Butenylgruppen auf den Grad der Substitution (DS). In beiden Fällen bringen diese Werte zum Ausdruck, wie hoch der Substitutionsgrad der betreffenden Gruppe pro Anhydroglucoseeinheit ist.
Der reine Wirkstoffgehalt wird durch Abzug der Wasserfeuchte und des Restsalzgehaltes des Produktes bestimmt.
Tylose® H 10 ist eine Hydroxyethylcellulose der Clariant AG mit einem durchschnittlichen Polymerisationsgrad n = 180, deren 2%ige Lösung in Wasser eine Viskosität von ca. 10 mPa·s (nach Höppler bei 20 °C) ausbildet.
Tylose® H 20 ist eine Hydroxyethylcellulose der Clariant AG mit einem durchschnittlichen Polymerisationsgrad n = 220, deren 2%ige Lösung in Wasser eine Viskosität von ca. 20 mPa·s (nach Höppler bei 20 °C) ausbildet.
Tylose® H 200 ist eine Hydroxyethylcellulose der Clariant AG mit einem durchschnittlichen Polymerisationsgrad n = 480, deren 2%ige Lösung in Wasser eine Viskosität von ca. 200 mPa·s (nach Höppler bei 20 °C) ausbildet.
Emulsogen®-Emulgatoren sind nichtionische Tenside der Clariant AG auf Basis oxethylierter Fettalkohole.

Die in den Beispielen angegebenen Teile und Prozente beziehen sich auf das Gewicht, soweit nicht anders vermerkt. Der Feststoffgehalt der in den folgenden Beispielen hergestellten Dispersionen beträgt ca. 55 %.

### Beispiel 1

### Herstellung von Butenyl-hydroxyethylcellulose nach Verfahren I.

in einem 2 I Glasreaktor mit Ankerrührer werden 75 g Fichtenzellstoff (97 %ig) in 593 g nahezu wasserfreiem Isopropanol suspendiert. Nach Inertisieren mit Stickstoff läßt man unter Rühren bei 25 °C eine Lösung von 19,4 g Natriumhydroxid in 152,2 g Wasser zulaufen. Es wird 60 min bei 25 °C gerührt. Man läßt 91 g Ethylenoxid zulaufen, hält die Temperatur 1 h lang bei 40 °C und anschließend 1 h bei 80°. Dann gibt man bei ca. 50°C die gewünschte Menge eines Butenylchlorids gelöst in 50 g Isopropanol zu und verethert 2 Stunden bei 115°C. Nach dem Abkühlen auf Raumtemperatur wird mit 20%iger Salzsäure neutralisiert. Das Produkt wird abgesaugt und mit 80 %igem wäßrigem Aceton bis zu einem Salzgehalt < 0,5% gewaschen. Die Trocknung erfolgt bei 75 °C im Vakuumtrockenschrank.
In Tabelle 1 sind Einzelbeispiele zusammengestellt.

**Tabelle 1**

| Beispiel Nr. | Einsatzmengen (g) | | | | | | | | Produkt | | | Viskosität mPas 2%ig |
|---|---|---|---|---|---|---|---|---|---|---|---|---|
| | Zellstoff | | Isopropanol | H₂O | NaOH | Butenylchlorid | | Ethylenoxid | Ausbeute (g) | MS HE | DS Butenyl | |
| | Typ | g | | | | Typ | g | | | | | |
| Vergleich | Nadelholz I | 75,0 | 643 | 152,2 | 19,4 | A | 0,0 | 91,0 | 114,7 | 2,12 | | 10000 |
| 1a | Nadelholz I | 75,0 | 643 | 152,2 | 19,4 | A | 4,1 | 91,0 | 111,0 | 2,65 | 0,035 | 11900 |
| 1b | Nadelholz I | 75,0 | 643 | 152,2 | 19,4 | A | 8,2 | 91,0 | 112,8 | 2,63 | 0,075 | 10900 |
| 1c* | Nadelholz I | 75,0 | 643 | 152,2 | 19,4 | A | 20,5 | 91,0 | 118,1 | 2,47 | 0,189 | 10300 |
| Vergleich | Nadelholz II | 75,0 | 643 | 152,2 | 19,4 | A | 0,0 | 91,0 | 116,1 | 2,48 | 0,000 | 130 |
| 1d | Nadelholz II | 75,0 | 643 | 152,2 | 19,4 | A | 4,1 | 91,0 | 117,4 | 2,34 | 0,036 | 140 |
| 1e | Nadelholz II | 75,0 | 643 | 152,2 | 19,4 | A | 8,2 | 91,0 | 119,8 | 2,36 | 0,072 | 145 |
| 1f* | Nadelholz II | 75,0 | 643 | 152,2 | 19,4 | A | 20,5 | 91,0 | 111,9 | 2,61 | 0,132 | 160 |
| Vergleich | Nadelholz I | 75,0 | 643 | 152,2 | 19,4 | B | 0,0 | 91,0 | 114,7 | 2,12 | 0,000 | 10000 |
| 1g | Nadelholz I | 75,0 | 643 | 152,2 | 19,4 | B | 4,1 | 91,0 | 120,0 | 2,52 | 0,017 | 7140 |
| 1h | Nadelholz I | 75,0 | 643 | 152,2 | 19,4 | B | 8,2 | 91,0 | 118,6 | 2,49 | 0,035 | 7680 |
| 1i | Nadelholz I | 75,0 | 643 | 152,2 | 19,4 | B | 20,5 | 91,0 | 122,6 | 2,19 | 0,085 | 5780 |
| 1k* | Nadelholz I | 75,0 | 643 | 152,2 | 19,4 | B | 40,5 | 91,0 | 121,8 | 2,58 | 0,171 | 4460 |
| 1l* | Nadelholz I | 75,0 | 643 | 152,2 | 28,7 | B | 61,0 | 91,0 | 117,7 | 2,08 | 0,224 | 3950 |
| Vergleich | Nadelholz II | 75,0 | 643 | 152,2 | 19,4 | B | 0,0 | 91,0 | 118,9 | 2,14 | 0,000 | 156 |
| 1m | Nadelholz II | 75,0 | 643 | 152,2 | 19,4 | B | 4,1 | 91,0 | 120,0 | 2,11 | 0,014 | 136 |
| 1n | Nadelholz II | 75,0 | 643 | 152,2 | 19,4 | B | 8,2 | 91,0 | 118,4 | 2,30 | 0,033 | 133 |
| 1o | Nadelholz II | 75,0 | 643 | 152,2 | 19,4 | B | 20,5 | 91,0 | 118,4 | 2,09 | 0,083 | 143 |
| 1p* | Nadelholz II | 75,0 | 643 | 152,2 | 19,4 | B | 40,5 | 91,0 | 116,3 | 2,26 | 0,154 | 142 |

| | | | | | | | | | | | | |
|---|---|---|---|---|---|---|---|---|---|---|---|---|
| * Vergleich A = 1-Chlor-2-buten (Crotylchlorid) B = 3-Chlor-1-buten (α-Methyl-allylchlorid) HE = Hydroxyethyl | | | | | | | | | | | | |

### Beispiel 2

### Herstellung von Butenyl-hydroxyethylcellulose nach Verfahren II.

In einem 2 I Glasreaktor mit Blattrührer werden 80 g Hydroxyethylcellulose Tylose® in 520 g 87%igem wäßrigem Isopropanol suspendiert. Nach dem Evakuieren und Inertisieren mit Stickstoff gibt man 50%ige Natronlauge zu und spült mit ca. 15 ml Wasser nach. Bei 25°C wird 2 Stunden alkalisiert, die gewünschte Menge eines Butenylchlorids gelöst in 50 g Isopropanol zugegeben und 2 h bei 110°C verethert. Nach dem Abkühlen auf Raumtemperatur wird mit 20%iger Salzsäure neutralisiert.
Das Produkt wird abgesaugt und mit 80%igem wäßrigem Aceton bis zu einem Salzgehalt < 0,5% gewaschen. Die Trocknung erfolgt bei 75 °C im Vakuumtrockenschrank.
In Tabelle 2 sind Einzelbeispiele zusammengestellt.

**Tabelle 2**

| Beispiel Nummer | Einsatzmengen (g) | | | | | | | | Produkt- | | | Viskosität mPas 2%ig |
|---|---|---|---|---|---|---|---|---|---|---|---|---|
| | Eingesetzte HEC | | Isopropanol | NaOH | | H2O | Butenylchlorid | | Ausbeute | MS | DS | |
| | Typ | g | | (g) | (%) | | Typ | g | (g) | HE | Butenyl | |
| 2a | | 80,0 | 500 | 3,1 | 50 | 88 | A | 2,9 | 72,0 | 1,65 | 0,033 | 29 |
| 2b | Tylose® | 80,0 | 500 | 6,2 | 50 | 87 | A | 5,8 | 72,1 | 1,64 | 0,083 | 29 |
| 2c* | H 20 | 80,0 | 500 | 9,1 | 50 | 85 | A | 8,7 | 73,2 | 1,61 | 0,144 | 25 |
| 2d* | MS: 1,59 | 80,0 | 500 | 15,2 | 50 | 82 | A | 14,4 | 69,4 | 1,58 | 0,245 | 27 |
| 2e | Feuchte: 5,7 | 80,0 | 500 | 3,1 | 50 | 88 | B | 2,9 | 73,0 | 1,50 | 0,006 | 18 |
| 2f | Salzgeh.: 2,6 | 80,0 | 500 | 6,2 | 50 | 87 | B | 5,8 | 72,6 | 1,61 | 0,019 | 18 |
| 2g | Viskosität: 21 | 80,0 | 500 | 9,1 | 50 | 85 | B | 8,7 | 73,5 | 1,64 | 0,033 | 23 |
| 2h | | 80,0 | 500 | 15,2 | 50 | 82 | B | 14,4 | 73,1 | 1,59 | 0,066 | 22 |
| 2i | | 80,0 | 500 | 3.1 | 50 | 88 | A | 2,9 | 73,1 | 1,71 | 0,033 | 20 |
| 2k | Tylose® | 80,0 | 500 | 6,2 | 50 | 87 | A | 5,8 | 72,4 | 1,74 | 0,088 | 14 |
| 2l* | H 10 | 80,0 | 500 | 9,1 | 50 | 85 | A | 8,7 | 72,8 | 1,62 | 0,141 | 15 |
| 2m* | MS: 1,58 | 80,0 | 500 | 15,2 | 50 | 82 | A | 14,4 | 66,4 | 1,62 | 0,251 | 16 |
| 2n | Feuchte: 5,7 | 80,0 | 500 | 3,1 | 50 | 88 | B | 2,9 | 71,5 | 1,71 | 0,003 | 16 |
| 2o | Salzgeh.: 3,1 | 80,0 | 500 | 6,2 | 50 | 87 | B | 5,8 | 70,9 | 1,68 | 0,020 | 15 |
| 2p | Viskosität: 15 | 80,0 | 500 | 9,1 | 50 | 85 | B | 8,7 | 72,8 | 1,69 | 0,037 | 16 |
| 2q | | 80,0 | 500 | 15,2 | 50 | 82 | B | 14,4 | 70,7 | 1,71 | 0,067 | 15 |

| | | | | | | | | | | | | |
|---|---|---|---|---|---|---|---|---|---|---|---|---|
| A = 1-Chlor-2-buten (Crotylchlorid) B = 3-Chlor-1-buten (α-Methyl-allylchlorid) HE = Hydroxyethyl * Vergleich | | | | | | | | | | | | |

### Beispiel 3 (Vergleich)

### Herstellung einer Vinylester-Polymerdispersion unter Verwendung von Hydroxyethylcellulose.

Das verwendete Monomergemisch besteht aus 25 % Veova® 10 (Vinylester α-verzweigter C₁₀-Carbonsäuren, Shell) und 75 % Vinylacetat. In einem 2-Liter-Reaktor mit Planschliff und Deckel werden 423,09 g entionisiertes Wasser vorgelegt und unter Rühren 14 g Hydroxyethylcellulose (Tylose® H 20, entsprechend 1,06 % bezogen auf die fertige Polymerdispersion), bei Raumtemperatur zugegeben und gelöst. Danach werden der Reihe nach zugesetzt:

| | |
|---|---|
| 3,5 g | Borax |
| 11,5 g | Emulsogen® EPA 073 |
| 20,0 g | Emulsogen® EPN 287 |
| 0,7 g | Kaliumperoxidisulfat |
| 1,4 g | Essigsäure (99 - 100 %) |
| 59,4 g | Initiatorlösung (1,17 %ige Kaliumperoxodisulfat-Lösung) |
| 70,0 g | Monomergemisch |

Die Emulsion wird innerhalb von 30 Minuten auf eine Temperatur von 74 bis 77 °C erhitzt, die 15 Minuten gehalten wird. Danach werden 630 g Monomergemisch mit einer Dosiergeschwindigkeit von 4,49 ml/min und 85,61 g Initiatorlösung (1,17 %ig) mit einer Dosiergeschwindigkeit von 0,51 ml/min aus zwei getrennten Dosimaten zugegeben. Die Polymerisationstemperatur stellt sich bei 80 °C ein. 630 g Monomergemisch werden über eine Zeitspanne von 2 h 40 min hinzugefügt, die Initiatorlösung über 2 h 50 min.

Nach beendeter Zugabe der Chemikalien wird die Reaktionstemperatur von 80 °C über 2 h beibehalten. Danach wird die Dispersion abgekühlt und bei 40 °C mit 2 g Mergal® K 9 N, (Riedel de Haën) konserviert. Die physikalischen Eigenschaften der Polymerdispersionen sind in den Tabellen 3 und 4 zusammengestellt.

Beurteilung: Die Viskosität der Dispersion bei niedrigem Schergefälle ist mit 11.700 mPa·s an der unteren tolerierbaren Grenze. Der Koagulatanteit (Sieb 40 µm) ist sehr hoch (Tabelle 4).

### Beispiel 4 (Vergleich)

Anstelle von 14 g Tylose® H 20 wurden nur 7,0 g eingesetzt.
Die Viskosität der Dispersion ist viel zu niedrig (Tabelle 3).

### Beispiel 5 (Vergleich)

Anstelle von 14 g Tylose® H 20 (Viskositätsstufe 20 mPa·s bei 2 %) wurden 14 g Tylose® H 200 (Viskositätsstufe 200 mPa·s bei 2 %) eingesetzt.
Die Dispersion ist generell als gut brauchbar zu beurteilen, jedoch ist die Viskosität bei hohem Schergefälle an der Obergrenze des gewünschten Bereichs.

### Beispiel 6 (Vergleich)

Anstelle von 14 g Tylose® H 20 (Viskositätsstufe 20 mPa·s bei 2 %) wurden 7,0 g Tylose® H 200 (Viskositätsstufe 200 mPa·s bei 2 %) eingesetzt.
Die Viskosität der Dispersion bei niedrigem Schergefälle ist zu niedrig, die Teilchengröße zu hoch (Tabelle 4).

### Beispiel 7

Anstelle von 14 g Tylose® H 20 wurden 7,0 g einer Butenylhydroxyethylcellulose nach Verfahren I mit einem DS (Buten) von 0,014 verwendet.
Die Polymerdispersion zeigt in allen anwendungstechnischen und rheologischen Test zufriedenstellende Resultate (Tabellen 3 und 4) bei um die Hälfte reduziertem Celluloseethereinsatz, bezogen auf Vergleichsbeispiel 5.

### Beispiel 8

Anstelle von 14 g Tylose® H 20 wurden 7,0 g einer Butenyl-HEC nach Verfahren I mit einem DS (Buten) von 0,033 eingesetzt.
Die Polymerdispersion zeigt günstige rheologische Resultate sowie niedrige Wasseraufnahmen des Polymerfilms (Tabellen 3 und 4) bei um die Hälfte reduziertem Celluloseethereinsatz, bezogen auf Vergleichsbeispiel 5.

### Beispiel 9

Anstelle von 14 g Tylose® H 20 werden 7,0 g einer Crotylhydroxyethylcellulose nach Verfahren II mit einem DS(Crotyl) von 0,033 verwendet.
Die Rheologie der Dispersion ist als gut zu beurteilen (Tabelle 3). Die Wasseraufnahme der Polymerfilme ist als günstig zu betrachten. Der Celluloseethereinsatz ist dabei um die Hälfte reduziert, bezogen auf Vergleichsbeispiel 5.

### Beispiel 10

Anstelle von 14 g Tylose® H 20 werden 7,0 g einer Butenyl-HEC nach Verfahren II mit einem DS(Buten) von 0,066 verwendet.
Die Polymerdispersion zeigt in allen anwendungstechnischen und rheologischen Tests zufriedenstellende Resultate (Tabellen 3 und 4) bei um die Hälfte reduziertem Celluloseethereinsatz, bezogen auf Vergleichsbeispiel 5.

### Beispiel 11

Anstelle von 14 g Tylose® H 20 werden 7,0 g einer Crotyl-HEC nach Verfahren II mit einem DS(Crotyl) von 0,083 verwendet.
Die Polymerdispersion zeigt in allen anwendungstechnischen und rheologischen Tests zufriedenstellende Resultate (Tabellen 3 und 4) bei um die Hälfte reduziertem Celluloseethereinsatz, bezogen auf Vergleichsbeispiel 5.

### Beispiel 12

Anstelle von 14 g Tylose® H 20 werden 7,0 g einer Crotyl-HEC nach Verfahren II mit einem DS (Crotyl) = 0,088 verwendet.
Die Polymerdispersion zeigt in allen anwendungstechnischen und rheologischen Tests zufriedenstellende Resultate (Tabellen 3 und 4) bei um die Hälfte reduziertem Celluloseethereinsatz, bezogen auf Vergleichsbeispiel 5.

### Beispiel 13

Anstelle von 14 g Tylose® H 20 werden 7,0 g einer Crotyl-HEC nach Verfahren II mit einem DS(Crotyl) von 0,144 verwendet.
Die Dispersionsviskosität ist zu niedrig ausgefallen (Tabelle 3), die Teilchengröße ist grob disperser und die Koagulatmenge sehr niedrig (Tabelle 4) bei um die Hälfte reduziertem Celluloseethereinsatz, bezogen auf Vergleichsbeispiel 5.

**Tabelle 3:**

| Viskositätsprofile der Beispielsdispersionen | | | | | | | | | | | |
|---|---|---|---|---|---|---|---|---|---|---|---|
| Celluloseether | Beispiel Nr. | Einsatzmenge (%) | DS Buten | Typ | Viskosität (mPas) bei Schergefälle | | | | | | |
| | | | | | 1,00 (1/s) | 2,50 (1/s) | 6,30 (1/s) | 16,0 (1/s) | 40,0 (1/s) | 100 (1/s) | 250 (1/s) |
| Tylose® H 20 | 3 | 1,06 | | | 11700 | 5740 | 2360 | 1380 | 730 | 433 | 270 |
| Tylose® H 20 | 4 | 0,53 | | | 876 | 496 | 323 | 218 | 148 | 109 | 75 |
| Tylose® H 200 | 5 | 1,06 | | | 24600 | 10300 | 4520 | 2250 | 1170 | 653 | 399 |
| Tylose® H 200 | 6 | 0,53 | | | 1790 | 1040 | 624 | 380 | 232 | 154 | 104 |
| Butenyl - HEC | 7 | 0,53 | 0,014 | B | 20120 | 8600 | 3850 | 1880 | 937 | 518 | 302 |
| Butenyl - HEC | 8 | 0,53 | 0,033 | B | 24000 | 10300 | 4590 | 2210 | 1110 | 604 | 346 |
| Butenyl - HEC | 9 | 0,53 | 0,033 | A | 22400 | 8910 | 3990 | 1930 | 968 | 526 | 303 |
| Butenyl - HEC | 10 | 0,53 | 0,066 | B | 20100 | 8420 | 3810 | 1850 | 944 | 530 | 309 |
| Butenyl - HEC | 11 | 0,53 | 0,083 | A | 23500 | 9640 | 4250 | 2050 | 1040 | 578 | 343 |
| Butenyl - HEC | 12 | 0,53 | 0,088 | A | 22000 | 9490 | 4310 | 2080 | 1060 | 589 | 348 |
| Butenyl - HEC* | 13 | 0,53 | 0,144 | A | 10500 | 4630 | 2170 | 1130 | 629 | 385 | 254 |

| | | | | | | | | | | | |
|---|---|---|---|---|---|---|---|---|---|---|---|
| A = hergestellt mit 1-Chlor-2-buten (Crotylchlorid) B = hergestellt mit 3-Chlor-1-buten (α-Methyl-allylchlorid) * Vergleich | | | | | | | | | | | |

**Tabelle 4:**

| Teilchengrößen, Koagulatanteile, Wasseraufnahme und Pfropfraten zu den Beispielsprodukten | | | | | | | | | | | |
|---|---|---|---|---|---|---|---|---|---|---|---|
| Celluloseether | Beispiel Nr. | Einsatzmenge (%) | DS Buten | Typ | Teilchengröße (nm) gemessen bei | | Koagulatmenge (mg/1000g Dispersion) | | Wasseraufnahme des getrockneten Films (%) | | gepfropfte HEC (% vom Einsatz) |
| | | | | | 435 nm | 588 nm | 100 µm Sieb | 40 µm Sieb | 1. Aufnahme | 2. Aufnahme | |
| Tylose® H 20 | 3 | 1,06 | | | 235 | 255 | 262 | > 1000 | 15,7 | 9,7 | < 5 |
| Tylose® H 20 | 4 | 0,53 | | | 318 | 406 | 361 | 418 | 18,8 | 12,7 | < 5 |
| Tylose® H 200 | 5 | 1,06 | | | 257 | 321 | 100 | 100 | 17,7 | 13,5 | 17,2 |
| Tylose® H 200 | 6 | 0,53 | | | 397 | 475 | 158 | 196 | 14,6 | 10,3 | 12,4 |
| Butenyl - HEC | 7 | 0,53 | 0,014 | B | 217 | 229 | 266 | 789 | 15,1 | 10,7 | 9,5 |
| Butenyl - HEC | 8 | 0,53 | 0,033 | B | 221 | 237 | 484 | 900 | 14,4 | 9,9 | 14,0 |
| Butenyl - HEC | 9 | 0,53 | 0,033 | A | 211 | 226 | 603 | 910 | 12,9 | 10,6 | 24,7 |
| Butenyl - HEC | 10 | 0,53 | 0,066 | B | 252 | 274 | 128 | 389 | 16,7 | 9,9 | 22,5 |
| Butenyl - HEC | 11 | 0,53 | 0,083 | A | 247 | 267 | 196 | 597 | 14,5 | 10,6 | 39,5 |
| Butenyl - HEC | 12 | 0,53 | 0,088 | A | 255 | 255 | 184 | 520 | 16,5 | 11,3 | 35,8 |
| Butenyl - HEC* | 13 | 0,53 | 0,144 | A | 309 | 349 | 107 | 82 | 21,0 | 11,0 | 44,1 |

| | | | | | | | | | | | |
|---|---|---|---|---|---|---|---|---|---|---|---|
| * Vergleich A = hergestellt mit 1-Chlor-2-buten (Crotylchlorid) B = hergestellt mit 3-Chlor-1-buten (α-Methyl-allylchlorid) | | | | | | | | | | | |

## Patentansprüche

1. Verwendung von wasserlöslichen, nichtionischen Celluloseethem aus der Gruppe der Alkylcellulosen und Hydroxyalkylcellulosen, die zusätzlich mit Butenylgruppen substituiert sind und bei denen die durchschnittliche Anzahl der Butenylgruppen pro Anhydroglucoseeinheit (DS_{Butenyl}) 0,003 bis 0,10 beträgt, als Schutzkolloide bei der Herstellung von wässrigen Polymerdispersionen.

2. Verwendung nach Anspruch 1, **dadurch gekennzeichnet, dass** Celluloseether eingesetzt werden der allgemeinen Formel
[C₆H₇O₂(OR¹)(OR²)(OR³)]ₙ
wobei
C₆H₇O₂ eine Anhydroglucoseeinheit,
n 50 - 1700, insbesondere 100 - 300,
und R¹, R² und R³ unabhängig voneinander eine Polyalkylenoxidkette der allgemeinen Formel 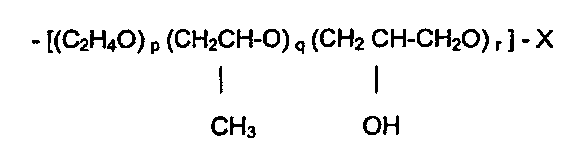 mit X = H, CH₃, C₂H₅ oder CHR⁴CR⁵ = CHR⁶
darstellt, worin
p, q und r unabhängig voneinander in R¹, R² und R³ jeweils unabhängig Werte von 0 bis 4 annehmen können, die Summe aller (p+q+r) addiert über R¹, R² und R³ pro Anhydroglucoseeinheit durchschnittlich größer als 1,3 und kleiner als 4,5, vorzugsweise 1,5 bis 3,0, ist und wobei die Reihenfolge der Oxyalkyleinheiten in der Polyalkylenoxidkette beliebig ist und die durchschnittliche Anzahl der CHR⁴CR⁵ = CHR⁶-Gruppen pro Anhydroglucoseeinheit (DS Butenyl) 0,003 bis 0,10 beträgt, und
R⁴, R⁵ und R⁶ ein H-Atom oder eine CH₃-Gruppe sind, wobei nur einer der Reste eine CH₃-Gruppe ist und die anderen beiden jeweils ein H-Atom sind.

3. Verwendung nach Anspruch 1 oder 2, **dadurch gekennzeichnet, dass** Celluloseether eingesetzt werden, bei denen die durchschnittliche Anzahl der CHR⁴CR⁵ = CHR⁶-Gruppen pro Anhydroglucoseeinheit (DS_{Butenyl}) 0,02 bis 0,06 beträgt.

4. Verwendung nach einem oder nach mehreren der Ansprüche 1 bis 3, **dadurch gekennzeichnet, dass** Celluloseether eingesetzt werden, die Butenylether von
Hydroxyethylcellulose mit 1,3 < p < 4,5; q = 0; r = 0 oder von
Hydroxypropylcellulose mit p = 0; 1,3 < q < 4,5; r = 0 oder von
Dihydroxypropylcellulose mit p = 0; q = 0; 1,3 < r < 4,5 sind.

5. Verwendung nach einem oder nach mehreren der Ansprüche 1 bis 4, **dadurch gekennzeichnet, dass** die wässrigen Polymerdispersionen durch radikalisch initiierte Polymerisation von ethylenisch ungesättigten Monomeren in wäßriger Emulsion hergestellt werden und dass die Celluloseether als Schutzkolloid in einer Menge von 0,2 bis 5,0 Gew.-%, bezogen auf die Gesamtmenge der eingesetzten Monomeren, eingesetzt werden.

## Claims

1. The use of a water-soluble, nonionic cellulose ether selected from the group consisting of alkylcelluloses and hydroxyalkylcelluloses which are additionally substituted by butenyl groups and in which the average number of butenyl groups per anhydroglucose unit (DS_{butenyl}) is from 0.003 to 0.10, as protective colloid in the preparation of aqueous polymer dispersions.

2. The use as claimed in claim 1, wherein a cellulose ether having the formula
[C₆H₇O₂(OR¹)(OR²)(OR³)]ₙ
where
C₆H₇O₂ is an anhydroglucose unit,
n is 50 - 1700, in particular 100 - 300,
and R¹, R² and R³ are each, independently of one another, a polyalkylene oxide chain of the formula 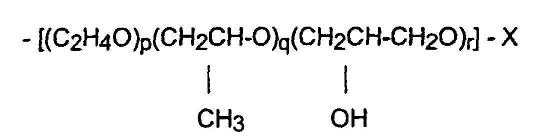 where X = H, CH₃, C₂H₅ or CHR⁴CR⁵ = CHR⁶
where
p, q and r independently of one another in R¹, R² and R³ can each independently assume values from 0 to 4, the sum of all (p+q+r) added over R¹, R² and R³ per anhydroglucose unit is, on average, greater than 1.3 and less than 4.5, preferably from 1.5 to 3.0, the order of the oxyalkyl units in the polyalkylene oxide chain can be any order desired and the average number of CHR⁴CR⁵=CHR⁶ groups per anhydroglucose unit (DS_{butenyl}) is from 0.003 to 0.10, and R⁴, R⁵ and R⁶ are each an H atom or a CH₃ group, with only one of the radicals being a CH₃ group and the other two each being an H atom, is used.

3. The use as claimed in claim 1 or 2, wherein a cellulose ether in which the average number of CHR⁴CR⁵=CHR⁶ groups per anhydroglucose unit (DS_{butenyl}) is from 0.02 to 0.06, is used.

4. The use as claimed in one or more of claims 1 to 3, wherein a cellulose ether which is a butenyl ether of
hydroxyethylcellulose where 1.3 < p < 4.5; q = 0; r = 0 or of
hydroxypropylcellulose where p = 0; 1.3 < q < 4.5; r = 0 or of
dihydroxypropylcellulose where p = 0; q = 0; 1.3 < r < 4.5, is used.

5. The use as claimed in one or more of claims 1 to 4, wherein the aqueous polymer dispersion is prepared by free-radical-initiated polymerization of ethylenically unsaturated monomers in aqueous emulsion and the cellulose ether is used as protective colloid in an amount of from 0.2 to 5.0% by weight, based on the total amount of monomers used.

## Revendications

1. Utilisation d'éthers de cellulose solubles dans l'eau et non ioniques, choisis dans l'ensemble comprenant les alkylcelluloses et les hydroxyalkylcelluloses, qui en outre sont substitués par des groupes butényle, et dans lesquels le nombre moyen des groupes butényle par unité d'anhydroglucose (DS_{butényle}) est de 0,003 à 0,10, en tant que colloïdes protecteurs lors de la préparation de dispersions aqueuses de polymères.

2. Utilisation selon la revendication 1, **caractérisée en ce qu'**on utilise des éthers de cellulose ayant la formule générale :
[C₆H₇O₂(OR¹)(OR²)(OR³)]ₙ
dans laquelle C₆H₇O₂ est une unité d'anhydroglucose,
n vaut de 50 à 1700, en particulier de 100 à 300,
et R¹, R² et R³ représentent chacun indépendamment les uns des autres une chaîne poly(oxyde d'alkylène) de formule générale 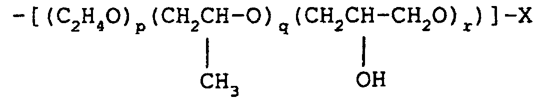 dans laquelle X est H, CH₃, C₂H₅ ou CHR⁴CR⁵=CHR⁶,
où
p, q et r peuvent, chacun indépendamment des autres, prendre dans R¹, R² et R³ des valeurs de 0 à 4, la somme des trois indices (p+q+r), calculée sur R¹, R² et R³ par unité d'anhydroglucose, étant en moyenne supérieure à 1,3 et inférieure à 4,5 et de préférence comprise entre 1,5 et 3,0,
l'ordre des unités oxyalkyle dans la chaîne poly(oxyde d'alkylène) étant quelconque, et le nombre moyen des groupes CHR⁴CR⁵=CHR⁶ par unité d'anhydroglucose (DS butényle) étant de 0,003 à 0,10, et
R⁴, R⁵ et R⁶ représentent chacun un atome d'hydrogène ou un groupe CH₃, un seul des radicaux étant un groupe CH₃, chacun des deux autres étant un atome d'hydrogène.

3. Utilisation selon la revendication 1 ou 2, **caractérisée en ce qu'**on utilise des éthers de cellulose dans lesquels le nombre moyen des groupes CHR⁴CR⁵=CHR⁶ par unité d'anhydroglucose (DS_{butényle}) est de 0,02 à 0,06.

4. Utilisation selon l'une ou plusieurs des revendications 1 à 3, **caractérisée en ce qu'**on utilise des éthers de cellulose qui sont des éthers butényliques de l'hydroxyéthylcellulose, avec 1,3 < p < 4,5 ; q = 0 ; r = 0 ; ou de l'hydroxypropylcellulose avec p = 0 ; 1,3 < q < 4,5 ; r = 0 ; ou de la dihydroxypropylcellulose avec p = 0 ; q = 0 ; 1,3 < r < 4,5.

5. Utilisation selon l'une ou plusieurs des revendications 1 à 4, **caractérisée en ce que** les dispersions aqueuses de polymères sont préparées par une polymérisation radicalaire de monomères à insaturation éthylénique en émulsion aqueuse, et **en ce que** les éthers de cellulose sont utilisés en tant que colloïdes protecteurs en une quantité de 0,2 à 5,0 % en poids par rapport au poids total des monomères utilisés.
